# EUROPEAN PATENT APPLICATION

(11) **EP 2 452 994 A1**
(43) Date of publication of application: **16.05.2012**
(21) Application number: 11188372.4
(22) Date of filing: 09.11.2011
(51) Int. Cl.: C09J 183/04

(54) **Addition curable silicone adhesive composition**

(30) Priority: 12.11.2010 JP 2010253704
(71) Applicant: Shin-Etsu Chemical Co., Ltd., Tokyo (JP)
(72) Inventor: Yamakawa, Naoki, Annaka-shi, Gunma (JP); Yokosuka, Yuta, Annaka-shi, Gunma (JP); Aketa, Takashi, Annaka-shi, Gunma (JP)
(74) Representative: TER MEER - STEINMEISTER & PARTNER GbR

(57) **Abstract**

An addition curable silicone adhesive composition is provided. This composition does not require a curing furnace and exhibits excellent adhesion to resins and metals in a short period under room temperature conditions. This composition has blended therein an organic compound or an organosilicon compound having at least one (meth)acryl group in one molecule, an organohydrogenpolysiloxane having at least one monovalent aromatic group such as phenyl group, and an organosilicon compound having at least one hydrogen atom bonded to the silicon atom and at least one divalent to tetravalent aromatic group such as phenylene skeleton in one molecule.

## Description

### TECHNICAL FIELD

This invention relates to an addition curable silicone adhesive composition which adheres at room temperature in short period with high adhesiveness, and in particular, with high adhesiveness with metal, glass, and organic resin.

### BACKGROUND ART

Conventional addition curable silicone adhesive compositions required heating for the curing, and the curing temperature was at least 100°C, which often caused adverse effects to the substrate. Heating at such temperature also required an apparatus capable of controlling the temperature and maintenance of such apparatus. An enormous energy is also required for retaining the curing tank at the curing temperature, and in view of the recent environmental consciousness, there is a strong demand for an addition curable silicone adhesive composition which can be cured at lower temperature in shorter period.

JP-A 2007-131750 and JP-A 2009-221312 propose addition type silicone adhesive compositions for this purpose. An allyl benzenecarboxylate ester is incorporated in these compositions.

However, the composition prepared by using these materials suffered from poor storage stability after preparing the composition, and in particular, the composition exhibited foaming during the curing after the storage. This phenomenon is considered to be caused by the allyl benzenecarboxylate ester in the composition. Although the exact reason for the foaming remains uncertain, this phenomenon has been found to be avoidable when the composition is left in the environment of reduced pressure immediately before its use. Further improvement in the adhesive performance, namely, adhesion in shorter period is demanded since a period of almost one day is required in the case of the adhesion with the metal. Nowadays, there is also a need for considering the environmental effects of the benzenecarboxylate ester.

### SUMMARY OF THE INVENTION

The present invention has been completed in view of the situation as described above, and an object of the present invention is to provide an addition curable silicone adhesive composition which does not require a curing furnace and which has realized excellent adhesion to resins and metals in a short period under room temperature conditions.

In order to achieve the object as described above, the inventors of the present invention conducted an intensive study and found that blending of an organic compound or an organosilicon compound having at least one (meth)acryl group in one molecule, an organohydrogenpolysiloxane having at least one monovalent aromatic group such as phenyl group, and an organosilicon compound having at least one hydrogen atom bonded to the silicon atom and at least one divalent to tetravalent aromatic group such as phenylene skeleton in one molecule is extremely effective for improving the room temperature adhesiveness. The present invention has been completed on the bases of such finding.

In view of the situation as described above, the present invention provides an addition curable silicone adhesive composition.
[1] An addition curable silicone adhesive composition comprising
   (A) 100 parts by weight of an organopolysiloxane containing at least 2 alkenyl groups bonded to the silicon atom in one molecule represented by the following average compositional formula:

      RₐR'_{b}SiO_{(4-a-)/2}

      wherein R represents an alkenyl group, R' represents a substituted or unsubstituted monovalent hydrocarbon group containing 1 to 10 carbon atoms not having an aliphatic unsaturated bond, and a and b are a number satisfying 0 < a ≤ 2, 0 < b < 3, and 0 < a+b ≤ 3;
   (B) 0.3 to 30 parts by weight of an organohydrogenpolysiloxane having at least 2 hydrogen atoms bonded to the silicon atom in one molecule and not containing an aromatic group;
   (C) 0.1 to 10 parts by weight of an organohydrogenpolysiloxane having at least one monovalent aromatic group bonded to the silicon atom and hydrogen atom bonded to the silicon atom in one molecule;
   (D) 0.1 to 30 parts by weight of an organosilicon compound having a divalent to tetravalent aromatic group bonded to the silicon atom and hydrogen atom bonded to the silicon atom in one molecule;
   (E) 0.01 to 10 parts by weight of an organic compound or an organosilicon compound having at least one (meth)acryl group in one molecule with the proviso that the molecule does not contain hydrogen atom bonded to the silicon atom; and (F) an addition catalyst at a catalytic amount.
[2] An addition curable silicone adhesive composition according to the above [1] wherein the component (B) contains at least one alkoxysilyl group.
[3] An addition curable silicone adhesive composition according to the above [1] or [2] further comprising
   (G) an organometallic compound which is at least one member selected from titanium compounds and zirconium compounds, at an amount of 0.001 to 5 parts by weight in relation to 100 parts by weight of the component (A).
[4] An addition curable silicone adhesive composition according to any one of the above [1] to [3] further comprising
   (H) a reinforcing silica fine powder at an amount of 5 to 100 parts by weight in relation to 100 parts by weight of the component (A).
[5] An addition curable silicone adhesive composition according to any one of the above [1] to [4] wherein the adhesive composition is the one used for adhesion of a metal, glass, or an organic resin.

The addition curable silicone adhesive composition of the present invention cures in a short period of about 30 minutes to 24 hours when the composition is left at room temperature of 10 to 40°C not requiring any heating, and this adhesive composition exhibits good adhesion to various substrates such as metal, glass and organic resin substrates.

### DETAILED DESCRIPTION OF THE INVENTION

The addition curable silicone adhesive composition of the present invention comprises
(A) 100 parts by weight of an organopolysiloxane containing at least 2 alkenyl groups bonded to the silicon atom in one molecule represented by the following average compositional formula:

   RₐR'_{b}SiO_{(4-a-b)/2}

   wherein R represents an alkenyl group, R' represents a substituted or unsubstituted monovalent hydrocarbon group containing 1 to 10 carbon atoms not having an aliphatic unsaturated bond, and a and b are a number satisfying 0 < a ≤ 2, 0 < b < 3, and 0 < a+b ≤ 3;
(B) 0.3 to 30 parts by weight of an organohydrogenpolysiloxane having at least 2 hydrogen atoms bonded to the silicon atom in one molecule and not containing an aromatic group;
(C) 0.1 to 10 parts by weight of an organohydrogenpolysiloxane having at least one divalent to tetravelent monovalent aromatic group and hydrogen atom bonded to the silicon atom in one molecule;
(D) 0.1 to 30 parts by weight of an organosilicon compound having a divalent to tetravalent aromatic group bonded to the silicon atom and hydrogen atom bonded to the silicon atom in one molecule;
(E) 0.01 to 10 parts by weight of an organic compound or an organosilicon compound having at least one (meth)acryl group in one molecule with the proviso that the molecule does not contain hydrogen atom bonded to the silicon atom; and
(F) an addition catalyst at a catalytic amount.

### (A) Alkenyl group-containing organopolysiloxane

The alkenyl group-containing organopolysiloxane of the component (A) is an organopolysiloxane containing at least 2 alkenyl groups bonded to the silicon atom in one molecule represented by the following average compositional formula (1):

RₐR'_{b}SiO_{(4-a-b)}/2 (1)

wherein R represents an alkenyl group, R' represents a substituted or unsubstituted monovalent hydrocarbon group containing 1 to 10 carbon atoms not having an aliphatic unsaturated bond, and a and b are a number satisfying 0 < a ≤ 2, 0 < b < 3, and 0 < a+b ≤ 3.

The alkenyl group-containing organopolysiloxane of the component (A) is the base polymer of this composition, and contains at least 2 on average (typically 2 to 50), preferably 2 to 20, and more preferably 2 to 10 alkenyl groups bonded to the silicon atom in one molecule. Examples of the alkenyl group R in the organopolysiloxane of the component (A) include vinyl group, allyl group, butenyl group, pentenyl group, hexenyl group, and heptenyl group, and the most preferred is vinyl group. The alkenyl group in the component (A) may be bonded, for example, at the end and/or in the side chain of the molecular chain.

In the organopolysiloxane of the component (A), the organic group R' bonded to the silicon atom other than the alkenyl group include alkyl groups such as methyl group, ethyl group, propyl group, butyl group, pentyl group, hexyl group, and heptyl group; aryl groups such as phenyl group, tolyl group, xylyl group, and naphthyl group; aralkyl groups such as benzyl group and phenethyl group; and halogenated alkyl groups such as chloromethyl group, 3-chloropropyl group, and 3,3,3-trifluoropropyl group; and the most preferred are methyl group and phenyl group.

The component (A) may have a molecular structure such as straight chain, partly branched straight chain, cyclic, branched, and three dimensional network structures. Preferably, the component (A) is basically a straight chain diorganopolysiloxane wherein the backbone comprises a repetition of a diorganosiloxane unit (D unit), and opposite ends of the molecular chains are capped with a triorganosiloxy group; or a mixture of the straight chain diorganopolysiloxane and a branched or three dimensional network organopolysiloxane.

In this case, the resinous (namely, the branched or three dimensional network structure) organopolysiloxane is not particularly limited as long as it is an organopolysiloxane containing the alkenyl group and SiO_{4/2} unit (Q unit) and/or R"SiO_{3/2} (T unit) (wherein R" is R or R'). Examples include resinous organopolysiloxaness comprising SiO_{4/2} unit (Q unit) and M units such as RR'₂SiO_{1/2} unit and R'₃SiO_{1/2} unit wherein the molar ratio of M/Q is 0.6 to 1.2, and the resinous organopolysiloxaness comprising the T unit and the M unit and/or D unit.

The straight chain organopolysiloxane and the resinous organopolysiloxane are preferably used at a weight ratio of 60:40 to 100:0, and more preferably 70:30 to 90:10.

The letter a is a number satisfying 0 < a ≤ 2, and preferably 0.001 ≤ a ≤ 1, b is a number satisfying 0 < b < 3, and preferably 0.5 ≤ b ≤ 2.5, with the proviso that a+b is 0 < a+b ≤ 3, and preferably 0.5 ≤ a+b ≤ 2.7.

The viscosity at 25°C of the component (A) is preferably in the range of 100 to 500,000 mPa·s, and more preferably 300 to 100,000 mPa·s in view of the favorable physical properties of the resulting silicone rubber as well as good working convenience of the composition. When a straight chain organopolysiloxane is used in combination with a resinous organopolysiloxane, the resinous organopolysiloxane dissolves in the straight chain organopolysiloxane, and the viscosity is the one measured for the homogeneous mixture after the mixing. In the present invention, the viscosity may be measured by using a rotary viscometer.

Examples of such organopolysiloxane of the component (A) include dimethylsiloxane-methylvinylsiloxane copolymer having opposite ends endcapped with trimethylsiloxy group, methylvinylpolysiloxane having opposite ends endcapped with trimethylsiloxy group, dimethylsiloxane-methylvinylsiloxane-methylphenylsiloxane copolymer having opposite ends endcapped with trimethylsiloxy group, dimethylpolysiloxane having opposite ends endcapped with dimethylvinylsiloxy group, methylvinylpolysiloxane having opposite ends endcapped with dimethylvinylsiloxy group, dimethylsiloxane-methylvinylsiloxane copolymer having opposite ends endcapped with dimethylvinylsiloxy group, dimethylsiloxane-methylvinylsiloxane-methylphenylsiloxane copolymer having opposite ends endcapped with dimethylvinylsiloxy group, dimethylpolysiloxane having opposite ends endcapped with trivinylsiloxy group, an organosiloxane copolymer comprising a siloxane unit represented by formula: R¹₃SiO_{0.5}, a siloxane unit represented by formula: R¹₂R²SiO_{0.5}, a siloxane unit represented by formula: R¹₂SiO, and a siloxane unit represented by formula: SiO₂, an organosiloxane copolymer comprising a siloxane unit represented by formula: R¹₃SiO_{0.5}, a siloxane unit represented by formula: R¹₂R²SiO_{0.5}, and a siloxane unit represented by formula: SiO₂, an organosiloxane copolymer comprising a siloxane unit represented by formula: R¹₂R²SiO_{0.5}, a siloxane unit represented by formula: R¹₂SiO, and a siloxane unit represented by formula: SiO₂, an organosiloxane copolymer comprising a siloxane unit represented by formula: R¹R²SiO, and a siloxane unit represented by formula: R¹SiO_{1.5} or a siloxane unit represented by formula: R²SiO_{1.5}, and a mixture of two or more of the organopolysiloxane as mentioned above.

The R¹ in the formula is a monovalent hydrocarbon group other than alkenyl groups, and examples of such group include alkyl groups such as methyl group, ethyl group, propyl group, butyl group, pentyl group, hexyl group, and heptyl group; aryl groups such as phenyl group, tolyl group, xylyl group, and naphthyl group; aralkyl groups such as benzyl group and phenethyl group; halogenated alkyl groups such as chloromethyl group, 3-chloropropyl group, and 3,3,3-trifluoropropyl group. R² in the formula is an alkenyl group such as vinyl group, allyl group, butenyl group, pentenyl group, hexenyl group, and heptenyl group.

### (B) Organohydrogenpolysiloxane

The organohydrogenpolysiloxane (B) used in the composition of the present invention is an organohydrogenpolysiloxane having at least 2 (an typically 2 to 300), preferably at least 3 (for example, 3 to 150), and more preferably 3 to 100 hydrogen atoms bonded to the silicon atom (namely, SiH group) in one molecule, and the organohydrogenpolysiloxane may have a straight chain, branched, or three dimensional network structure. Exemplary such organohydrogenpolysiloxanes include those represented by the following average compositional formula (2):

H_{c}R³_{d}SiO_{(4-c-d)/2} (2)

wherein R³ is independently a substituted or unsubstituted monovalent hydrocarbon group not having an aliphatic unsaturated bond, or an alkoxy group, c and d are independently a number satisfying 0 < c < 2, 0.8 ≤ d ≤ 2, and 0.8 < c+d ≤ 3, and preferably 0.05 ≤ c ≤ 1, 1.5 ≤ d ≤ 2, and 1.8 ≤ c+d ≤ 2.7. The number of silicon atom in one molecule (or the degree of polymerization) is 2 to 300, preferably 3 to 200, and more preferably 4 to 100.

Examples of the substituted or unsubstituted monovalent hydrocarbon group R³ not having an aliphatic unsaturated bond in the formula (2) include those mentioned above for the R' as well as alkoxy groups such as methoxy group or ethoxy group, while aromatic groups such as phenyl group are excluded. Typically, such groups are those containing 1 to 10 carbon atoms, and in particular, those containing 1 to 7 carbon atoms. The preferred are a lower alkyl group containing 1 to 3 carbon atoms such as methyl group, 3,3,3-trifluoropropyl group, and an alkoxy group containing 1 to 4 carbon atoms, and the most preferred are methyl group, methoxy group, and ethoxy group.

Examples of such organohydrogenpolysiloxanes include siloxane oligomers such as
1,1,3,3-tetramethyldisiloxane,
1,3,5,7-tetramethyltetracyclosiloxane,
1,3,5,7,8-pentamethylpentacyclosiloxane,
methylhydrogencyclopolysiloxane,
methylhydrogensiloxane-dimethylsiloxane cyclic copolymer, tris(dimethylhydrogen siloxy)methylsilane;
methylhydrogenpolysiloxane having opposite ends endcapped with trimethylsiloxy group,
a dimethylsiloxane-methylhydrogensiloxane copolymer having opposite ends endcapped with trimethylsiloxy group, methylhydrogenpolysiloxane having opposite ends endcapped with silanol group,
a dimethylsiloxane-methylhydrogensiloxane copolymer having opposite ends endcapped with silanol group,
dimethylpolysiloxane having opposite ends endcapped with dimethylhydrogensiloxy group,
methylhydrogenpolysiloxane having opposite ends endcapped with dimethylhydrogensiloxy group,
a dimethylsiloxane-methylhydrogensiloxane copolymer having opposite ends endcapped with dimethylhydrogensiloxy group; silicone resin comprising R³₂(H)SiO_{1/2} unit and SiO_{4/2} unit, and optionally containing R³₃SiO_{1/2} unit, R³₂SiO_{2/2} unit, R³(H)SiO_{2/2} unit, (H)SiO_{3/2} unit, or R³SiO_{3/2} unit (wherein R³ is as defined above); any of such compound wherein a part or all of the methyl groups in the compound has been replaced with another alkyl group such as ethyl group or propyl group; and a compound represented by the following formulae: 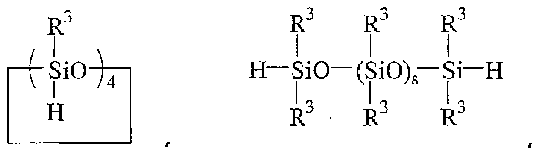 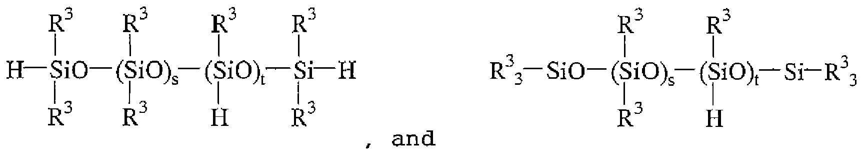 wherein, R³ is as defined above, and s and t are independently 0 or an integer of at least 1.

The organohydrogenpolysiloxane used in the composition of the present invention can be obtained by a method known in the art. For example, the organohydrogenpolysiloxane may be obtained by (co)hydrolysis of at least one chlorosilane selected from those represented by the general formula: R³SiHCl₂ and R³₂SiHCl (wherein R³ is as defined above) followed by condensation, or (co)hydrolysis of such chlorosilane in combination with at least one chlorosilane selected from those represented by the general formula: R³₃SiCl and R³₂SiCl₂ (wherein R³ is as defined above) followed by condensation. The organohydrogenpolysiloxane may also be the one obtained by further equilibrating the polysiloxane obtained by such (co)hydrolysis.

The alkoxysilyl group-containing organohydrogenpolysiloxane is not particularly limited as long as it has SiH group and an alkoxy group. Examples include: 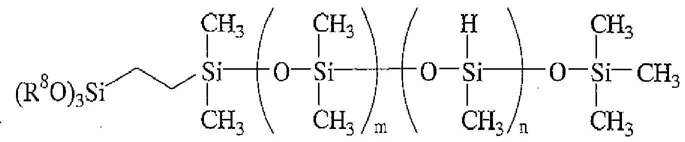 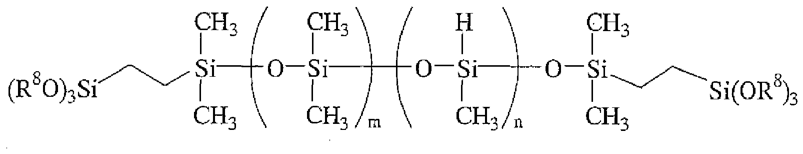 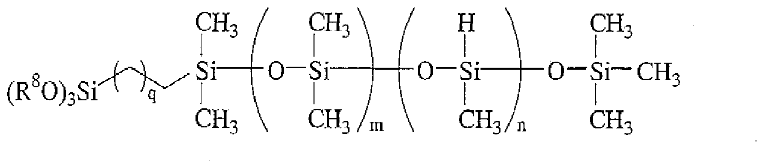 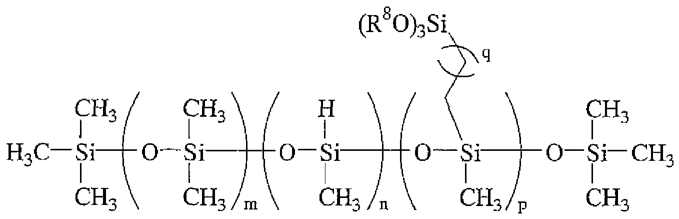 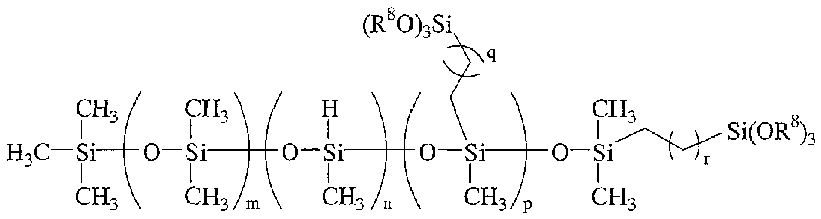 wherein R⁸ represents an alkyl group such as methyl group and ethyl group, m is an integer of at least 0, n is an integer of at least 2, p is an integer of at least 1, and q and r are an integer of at least 1.

The upper limits of m, n and p are not limited, although it is preferred to select the numbers of m, n and p so that the number of silicon atoms is within the above-described range, especially 4 to 300, preferably 4 to 200, more preferably 4 to 100.

The upper limite of g and r is preferably 10, more preferably 6.

Use of an alkoxysilyl group-containing organohydrogenpolysiloxane is effective mainly for improving the adhesion to a substrate of an inorganic material such as a metal or glass. This component is generally obtained by adding an organosilicon compound having an alkenyl group and alkoxysilyl group in one molecule to the organohydrogenpolysiloxane as described above. The alkoxysilyl group may be added either to the terminal SiH of the organohydrogenpolysiloxane or the SiH in the side chain of the terminal SiH, or to both of these SiH.

The component (B) may be used at 0.3 to 30 parts by weight, and preferably at 0.5 to 10 parts by weight in relation to 100 parts by weight of the component (A). When used at an excessively low amount, the resulting adhesive will be tacky and the strength will be insufficient. Excessive incorporation will result in the loss of adhesiveness despite improvement in the strength of the adhesive.

When the alkoxysilyl group-containing organohydrogenpolysiloxane is used, it is used at 0.3 to 20 parts by weight, and more preferably at 0.5 to 15 parts by weight in relation to 100 parts by weight of the component (A). When an excessive amount is used, curing will continue after the predetermined curing time, and the cured product may become brittle with an unduly high hardness.

### (C) Organohydrogenpolysiloxane having at least one monovalent aromatic group bonded to the silicon atom and hydrogen atom bonded to the silicon atom in one molecule

Component (C) is an organohydrogenpolysiloxane having at least one monovalent aromatic group bonded to the silicon atom and hydrogen atom bonded to the silicon atom in one molecule, and the degree of polymerization is preferably up to 15. This organohydrogenpolysiloxane may be either straight chain or branched.

Examples of the monovalent aromatic group include phenyl group, C₁ to C₁₀ alkylphenyl group, halophenyl group, and naphthyl group, and the preferred is phenyl group. The group other than the monovalent aromatic group and the hydrogen atom bonded to the silicon atom include those mentioned for the R³. The number of SiH group is at least 1, preferably 2 to 50, and more preferably 2 to 10. Since the component (C) is insoluble in the components (A) and (B), the component (C) is estimated to have the effect of pushing the adhesiveness-imparting component (E) which is also insoluble in the components (A) and (B) toward the interface between the adhesive and the substrate.

Examples of the component (C) include those represented by the following formulae (3) to (5): 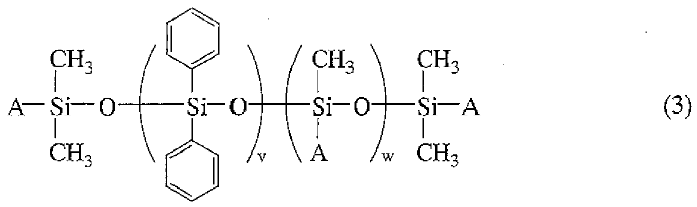 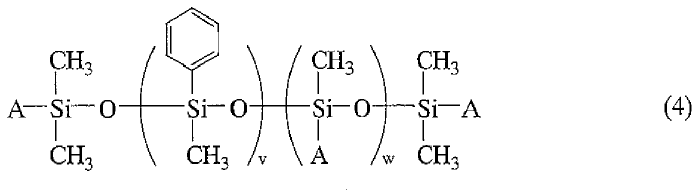 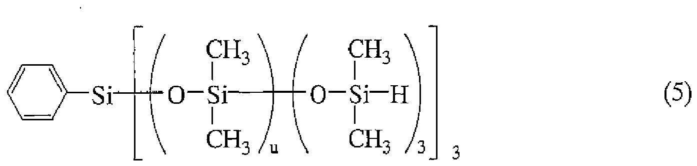 wherein A independently represents methyl group or hydrogen atom with the proviso that at least one of the A is hydrogen atom, v is an integer of 1 to 100, and preferably 1 to 30, w is an integer of 0 to 100, and preferably 0 to 30, and u is an integer of 0 to 3.

Among these, the preferred are those represented by the following formulae (6) and (7):

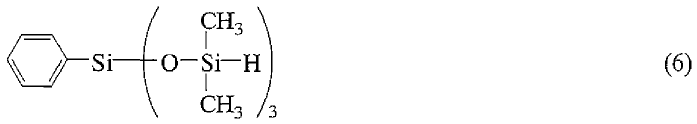

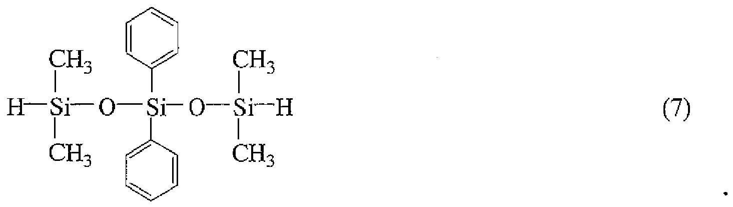

The component (C) may be used at 0.1 to 10 parts by weight, preferably at 0.5 to 10 parts by weight, and more preferably at 0.5 to 5 parts by weight in relation to 100 parts by weight of the component (A). Adhesion will be insufficient when used at an excessively low amount, and excessive incorporation will result in the loss of the strength of the adhesive.

### (D) Organohydrogenpolysiloxane having at least one divalent to tetravelent aromatic group bonded to the silicon atom and hydrogen atom bonded to the silicon atom in one molecule

Component (D) is an organosilicon compound such as a straight chain or cyclic organosiloxane oligomer or organoalkoxysilane containing 1 to 30, preferably 2 to 20, and more preferably 4 to 10 silicon atoms which has at least 1, preferably 1 to 20, and more preferably 2 to 10 hydrogen atoms bonded to the silicon atom, and at least one type of functional group such as epoxy group such as glycidoxy group, trialkoxysilyl group, and ester group.

The component (D) contains at least 1, and preferably 1 to 5 divalent to tetravalent aromatic groups such as phenylene group. Examples of the group other than those described above are the same as those mentioned above for R³.

Examples of the component (D) include those represented by the following formulae: 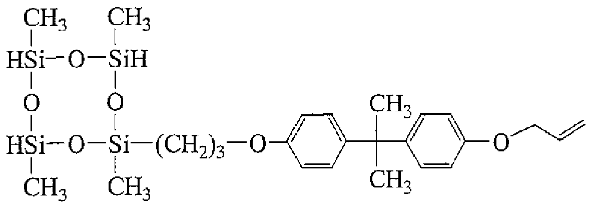 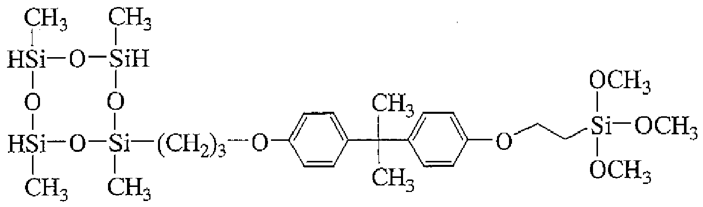 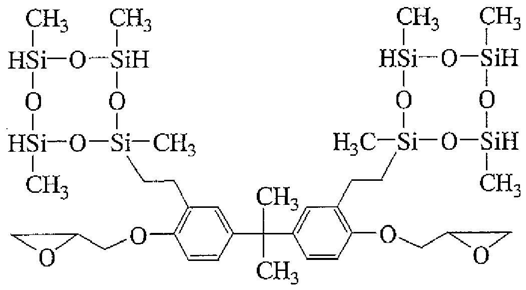 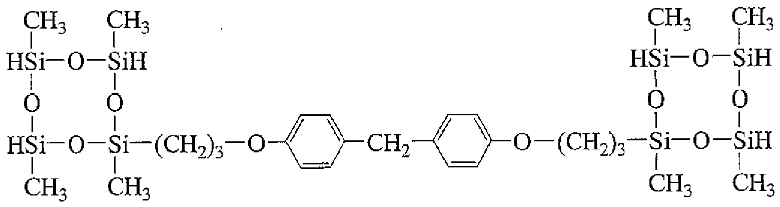 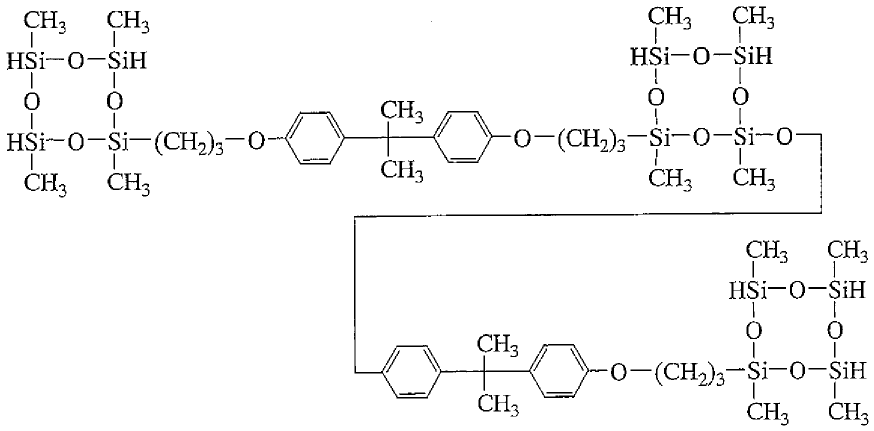 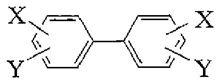 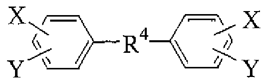 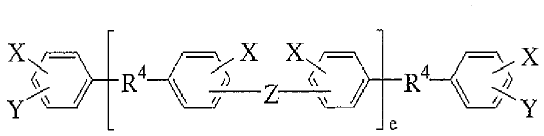 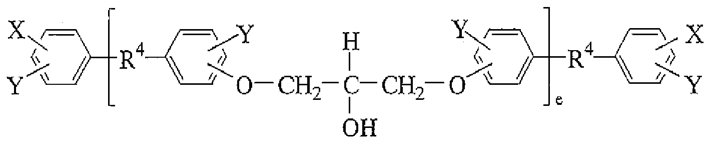 wherein X represents

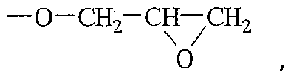

Y represents a group selected from: 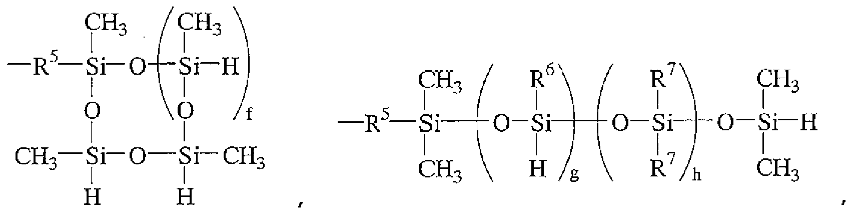 Z represents R⁴ or R⁵_{.}
R⁴ represents a group selected from: 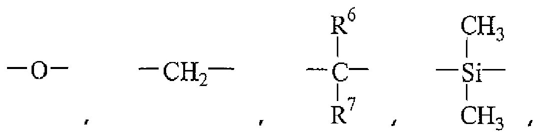 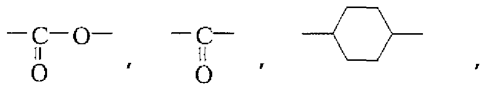 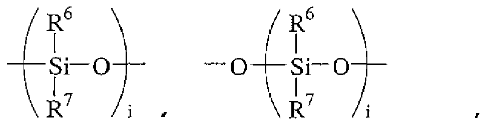 R⁵ represents a group selected from: 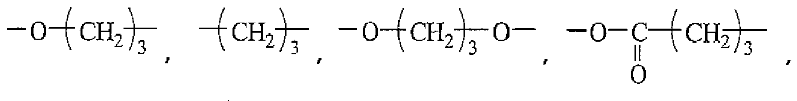 and

R⁶ and R⁷ are independently a substituted or unsubstituted monovalent hydrocarbon group selected from those mentioned for R³, e is 1 to 10, f is 1 to 4, g is 1 to 20, h is 0 to 50, i is 0 to 50, and more preferably, e is 1 to 10, f is 1, g is 1 to 10, h is 0 to 20, and i is 0 to 20.

The component (D) may be used at 0.1 to 30 parts by weight, preferably at 0.1 to 10 parts by weight, and more preferably at 0.1 to 5 parts by weight in relation to 100 parts by weight of the component (A). Adhesion will be insufficient when used at an excessively low amount, while excessive incorporation will result in the loss of the strength of the adhesive and such excessive use is also economically disadvantageous.

### (E) Organic compound or an organosilicon compound having at least one (meth)acryl group in one molecule

Component (E) is a component which improves the adhesion to the substrate together with the component (D) as described above, and the component (E) is preferably the one which is in compatible with the components (A) and (B) as in the case of the component (C). The component (E) does not have hydrogen atom bonded to the silicon atom. The component (E) is incorporated at 0.01 to 10 parts by weight, and preferably at 0.1 to 5 parts by weight in relation to 100 parts by weight of the component (A). Sufficient adhesion is not realized when used at an excessively low content, while excessive use results in the greatly reduced curing speed and increase in the time required for the curing.

The component (E) is not particularly limited as long as it has (meth)acryl group, and the preferred are compounds having (meth)acryl group and epoxy group, compounds having (meth)acryl group and hydroxy group bonded to the silicon atom (silanol group), and compounds having (meth)acryl group and an alkoxy group bonded to the silicon atom. Exemplary such compounds include those represented by the following formulae (8) and (9): 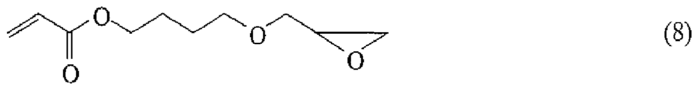 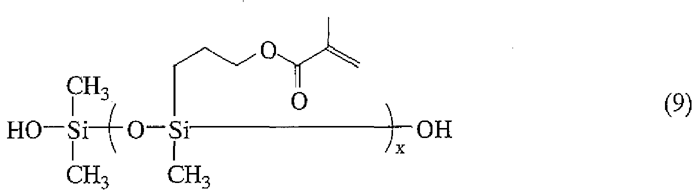 wherein, x is an integer of 1 to 10.

### (F) addition catalyst

The addition (hydrosilylation) catalyst used in the present invention is a catalyst for promoting addition between the alkenyl group of the component (A) and the hydrogen atom bonded to the silicon atom (namely, SiH group) in the components (B) to (D). Exemplary catalysts used for the hydrosilylation include catalysts known in the art such as platinum group metal catalysts.

The platinum group metal catalyst may be any hydrosilylation catalysts known in the art. Exemplary such catalysts include platinum group single metal such as platinum black, rhodium, and palladium; platinum chlorides such as H₂PtCl₄·yH₂O, H₂PtCl₆·yH₂O, NaHPtCl₆·yH₂O, KHPtCl₆·yH₂O, Na₂PtCl₆·yH₂O, K₂PtCl₄·yH₂O, PtCl₄·yH₂O, PtCl₂, and Na₂HPtCl₄·yH₂O (wherein y is an integer of 0 to 6, and preferably 0 or 6), chloroplatinic acid, and chloroplatinate salt; alcohol-modified chloroplatinic acid (see U.S. Patent No. 3,220,972); complex of chloroplatinic acid with an olefin (see U.S. Patent Nos. 3,159,601, 3,159,662, and 3,775,452); a platinum group metal such as platinum black, palladium supported on a support such as alumina, silica, and carbon; rhodium-olefin complex; chlorotris(triphenylphosphine) rhodium (Wilkinson's catalyst); and complex of platinum chloride, chloroplatinic acid or chloroplatinate salt with a vinyl group-containing siloxane, for example, vinyl group-containing cyclic siloxane. Of these, the preferred are chloroplatinic acid modified with silicone, for example, a platinum catalyst prepared by modifying the chloroplatinic acid with tetramethyldivinyldisiloxane in view of the compatibility and chlorine impurities. This catalyst may be added at 1 to 500 ppm, preferably at 3 to 100 ppm, and more preferably at 5 to 80 ppm by weight in terms of the platinum atom in relation to the total amount of the components (A).

In the present invention, the composition may further comprise a titanium compound and/or a zirconium compound (G) and a reinforcing silica fine powder (H) as described below.

### (G) Organometallic compound which is at least one member selected from titanium compound and zirconium compound

This component (G) functions as a co-catalyst of the hydrolysis and condensation of the alkoxysilyl group and promotes the adhesion particularly to the metal substrate. Examples of such component (G) include organotitanate esters such as tetraisopropyl titanate and tetrabutyl titanate; titanium condensation co-catalysts such as organotitanium chelate compounds, for example, diisopropoxy(acetyl acetonate) titanium, diisopropoxy(ethyl acetoacetate) titanium, tetraacetylacetonate titanium, and tetraacetylacetate titanium; organozirconium esters such as zirconium tetrapropylate, and zirconium tetrabutylate; organozirconium chelates such as zirconium tributoxyacetylacetonate, zirconium butoxyacetylacetonate bisethyl acetoacetate, and zirconium tetraacetylacetonate; and zirconium condensation co-catalysts such as oxozirconium compounds, for example, zirconium bis(2-ethylhesanoate)oxide and zirconium acetylacetonate(2-ethylhesanoate)oxide.

The component (G) is preferably used at 0.001 to 5 parts by weight, more preferably at 0.01 to 3 parts by weight, and still more preferably at 0.1 to 2 parts by weight in relation to 100 parts by weight of the component (A). Effect of the addition will be insufficient when used at an excessively low amount, while excessive use is uneconomical, and will also invite loss of heat resistance of the adhesive.

### (H) Reinforcing silica fine powder

The reinforcing silica fine powder used for the component (H) is not limited for the type of silica, and the silica used may be the one commonly used for the rubber reinforcement. The reinforcing silica fine powder may be the one used in conventional silicone rubber composition, and in particular, the reinforcing silica fine powder having a specific surface area measured by BET method of at least 50 m²/g, for example, precipitated silica, fumed silica, and calcined silica having a specific surface area measured by BET method of 50 to 400 m²/g. Use of fumed silica is preferable for the improvement of the rubber strength. The reinforcing silica fine powder may be a surface-treated silica fine powder. In this case, the silica fine powder may be the one which has been directly surface-treated in the powder conditions. The treatment of the silica fine powder may be accomplished by a conventional method well known in the art, for example, by placing the untreated silica fine powder and the surface-treating agent in a sealed mechanical kneader or fluidized bed at normal pressure, and mixing the ingredients at room temperature or at an elevated temperature optionally in the presence of an inert gas. If necessary, this treatment may be accelerated by using a catalyst. After the kneading, the mixture may be dried to produce the surface-treated silica fine powder. Amount of the surface-treating agent used may be an amount not less than the amount calculated from the area to be coated by the agent. Examples of the surface-treating agent include silazanes such as hexamethyldisilazane, silane coupling agents such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldichlorosilane, divinyldimethoxysilane, and chloropropyltrimethoxysilane, and organosilicon compounds such as polymethylsiloxane and organohydrogenpolysiloxane. The silica may be treated by the surface-treating agent for use as hydrophobic silica fine powder. The agent is preferably a silane coupling agent or a silazane.

The component (H) may be used at 0 to 100 parts by weight, preferably at 5 to 100 parts by weight, more preferably at 5 to 80 parts by weight, and still more preferably at 10 to 50 parts by weight in relation to 100 parts by weight of the component (A). When used at an amount in excess of 100 parts by weight, the filling will be difficult to detract from workability and processibility.

In the composition of the present invention, total amount of the hydrogen atoms directly bonded to the silicon atom in all components (molar amount of the SiH group) in relation to the total amount of the alkenyl group (molar amount of the alkenyl group) is preferably such that the ratio of the SiH group/alkenyl group is in the range of 1.0 to 5.0, and more preferably 1.5 to 4.0 (mole/mole).

In addition to the components as described above, various additives can be added to the addition curable silicone adhesive composition of the present invention depending on the intended use. Exemplary such additives include metal oxides such as titanium oxide, iron oxide, cerium oxide, vanadium oxide, cobalt oxide, chromium oxide, manganese oxide, and combination thereof; and inorganic fillers such as quartz powder, diatomaceous earth, calcium carbonate, magnesium carbonate, alumina, carbon, hollow glass, hollow resin, electroconductive inorganic powders such as gold, silver, and copper, and plating powder. In addition, pigment, heat resisting agent, flame retardant, plasticizer, reaction controller, and the like may also be added to the composition as long as the intended properties are not impaired. Such optional components may be added at an amount commonly used in the art and in the range not adversely affecting the merits of the present invention.

The addition curable silicone adhesive composition of the present invention can be produced by a method commonly used in the art. However, since the adhesive composition of the present invention rapidly cures at room temperature, production in the form of a multi-component (at least two-part) composition is preferable so that different parts can be mixed immediately before the use.

The addition curable silicone adhesive composition of the present invention can realize the curing and adhesion in 30 minutes to 24 hours in room temperature conditions of 10 to 40° C not requiring any heating.

### EXAMPLES

Next, the present invention is described in further detail by referring to Examples and Comparative Examples which by no means limit the scope of the present invention. In the Examples and Comparative Examples, viscosity is the value measure measured by a BH rotary viscometer at 25°C.

### Examples 1 to 8 and Comparative Examples 1 to 5

The materials as described below were used for the evaluation.
(A-1) A dimethylpolysiloxane having opposite ends capped with dimethylvinylsiloxy group represented by the following average compositional formula: 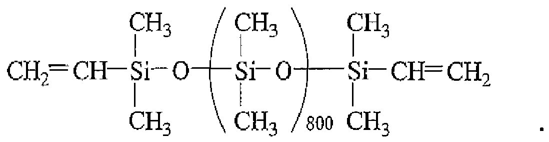 This dimethylpolysiloxane has a viscosity at 25°C of 10,000 mPa·s.
(A-2) A silicone resin comprising SiO_{4/2} unit, Me₃SiO_{1/2} unit, and ViMe₂SiO_{1/2} unit wherein molar ratio of Me₃SiO_{1/2} and ViMe₂SiO_{1/2} to SiO_{4/2} is 0.8, and the vinyl group content is 0.085 mole/100 g.
(B-1) A methylhydrogenpolysiloxane having 16 hydrogen atoms bonded to the silicon atom on average in one molecule represented by the following average compositional formula: 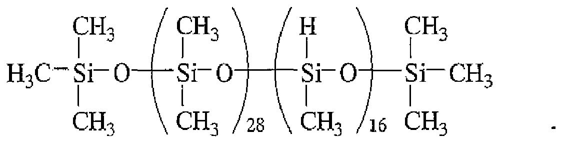 This methylhydrogenpolysiloxane has a viscosity at 25°C of 100 mPa·s, and the hydrogen gas generation is 120 ml/g.
(B-2) An alkoxysilyl group-containing organohydrogenpolysiloxane having a trimethoxysilyl group represented by the following average compositional formula:

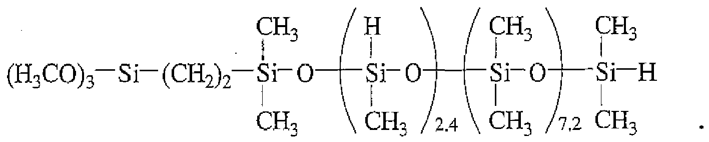

This organohydrogenpolysiloxane has a viscosity of 12 mPa·s, and the hydrogen gas generation is 80 ml/g.
(C-1) An organohydrogen siloxane represented by formula (6)
(C-2) An organohydrogen siloxane represented by formula (7)
(D) An organosilicon compound having a phenylene skeleton and SiH group represented by the following formula: 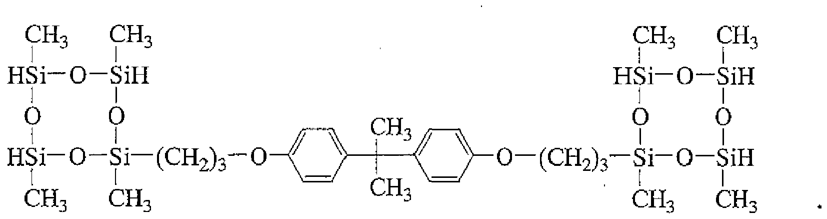
(E-1) An organic compound represented by formula (8)
(E-2) An organosilicon compound represented by formula (9) (a mixture of x = 2 to 6)
(F) A platinum catalyst having a tetramethyldivinyldisiloxane as the ligand, derived from chloroplatinic acid (platinum atom, 1% by weight)
(G) Titanium tetraacetylacetonate
(H) Fumed silica which has been surface treated with hexamethyldisilazane having a specific surface area as measured by BET method of 300 m²/g.

### Experimental method

Two part silicone compositions were prepared by dividing the formulation of Tables 1 and 2, below, into two parts. More specifically, a mixture of (A-1), (A-2), (E-1), (E-2), (F), (G), and (H) was thoroughly kneaded and defoamed to prepare Part A, and a mixture of (A-1), (A-2), (B-1), (B-2), (C-1), (C-2), (D), and (H) was thoroughly kneaded and defoamed to prepare Part B. These two part compositions were filled in a plastic dual cartridges manufactured by MixPac, and a static nozzle (cascade, 21) was mounted at the tip of the dual cartridge, and the two parts were mixed and extruded from the nozzle onto the substrates as described above. Adhesion of the silicone composition to the substrate was then evaluated. In the evaluation of the adhesion onto the substrate, the composition which has been coated and cured on the polycarbonate (PC), glass, aluminum (Al) substrate was cut with a razor blade, and the cured composition was pulled in the direction of 90 degrees at 23±2°C after 22 hours and 24 hours. The results are shown in Tables 1 and 2.

**Table 1**

| Content (parts by weight) | Example | | | | | | | |
|---|---|---|---|---|---|---|---|---|
| | 1 | 2 | 3 | 4 | 5 | 6 | 7 | 8 |
| A-1 | 100 | 100 | 100 | 100 | 100 | 100 | 100 | 100 |
| A-2 | 15 | 15 | 15 | 15 | 15 | 15 | 15 | 15 |
| B-1 | 3 | 3 | 3 | 3 | 3 | 3 | 3 | 3 |
| B-2 | | | | 3 | 3 | 3 | 3 | 3 |
| C-1 | 1 | | | 1 | | 1 | | |
| C-2 | | 1 | 1 | | 1 | | 1 | 1 |
| D | 1 | 1 | 1 | 1 | 1 | 1 | 1 | 1 |
| E-1 | 0.4 | 0.4 | | 0.4 | 0. 4 | 0. 4 | 0. 4 | |
| E-2 | | | 0. 4 | | | | | 0. 4 |
| F | 0. 4 | 0. 4 | 0. 4 | 0. 4 | 0 4 | 0. 4 | 0. 4 | 0. 4 |
| G | | | | | | 0. 1 | 0.1 1 | 0,1 |
| H | 15 | 15 | 15 | 15 | 15 | 15 | 15 | 15 |

| Experimental results | | | | | | | | |
|---|---|---|---|---|---|---|---|---|
| Curing: 2 hours | | | | | | | | |
| Adhesion to PC | Adhesion | Adhesion | Adhesion | Adhesion | Adhesion | Adhesion | Adhesion | Adhesion |
| Adhesion to glass | Tack | Tack | Tack | Strong tack | Strong tack | Adhesion | Adhesion | Adhesion |
| Adhesion to Al | Tack | Tack | Tack | Strong tack | Tack | Adhesion | Adhesion | Adhesion |

| Curing: 24 hours | | | | | | | | |
|---|---|---|---|---|---|---|---|---|
| Adhesion to PC | Adhesion | Adhesion | Adhesion | Adhesion | Adhesion | Adhesion | Adhesion | Adhesion |
| Adhesion to glass | Tack | Tack | Tack | Adhesion | Adhesion | Adhesion | Adhesion | Adhesion |
| Adhesion to A1 | Tack | Tack | Tack | Tack | Tack | Adhesion | Adhesion | Adhesion |

**Table 2**

| Content (parts by weight) | Comparative Example | | | | |
|---|---|---|---|---|---|
| | 1 | 2 | 3 | 4 | 5 |
| A-1 | 100 | 100 | 100 | 100 | 100 |
| A-2 | 15 | 15 | 15 | 15 | 15 |
| B-1 | 3 | 3 | 3 | 3 | 3 |
| C-1 | 1 | | | | 1 |
| C-2 | | 1 | | | |
| D | 1 | 1 | 1 | 1 | |
| E-1 | | | 0 4 | | 0. 4 |
| E-2 | | | | 0 4 | |
| F | 0. 4 | 0. 4 | 0. 4 | 0. 4 | 0. 4 |
| G | | | | | |
| H | 15 | 15 | 15 | 15 | 15 |

| Experimental results | | | | | |
|---|---|---|---|---|---|
| Curing: 2 hours | | | | | |
| Adhesion to PC | Strong tack | Tack | Tack | Tack | Tack |
| Adhesion to glass | Strong tack | Tack | Tack | Tack | Tack |
| Adhesion to A1 | Strong tack | Tack | Tack | Tack | Tack |

| Curing: 24 hours | | | | | |
|---|---|---|---|---|---|
| Adhesion to PC | Tack | Tack | Tack | Tack | Tack |
| Adhesion to glass | Tack | Tack | Tack | Tack | Tack |
| Adhesion to Al | Tack | Tack | Tack | Tack | Tack |

| | | | | | |
|---|---|---|---|---|---|
| Note: When the above peeling test was conducted, cohesive failure was evaluated as "Adhesion", partial cohesive failure was evaluated as "Strong tack", and delamination was evaluated as "Tack." | | | | | |

## Claims

1. An addition curable silicone adhesive composition comprising
(A) 100 parts by weight of an organopolysiloxane containing at least 2 alkenyl groups bonded to the silicon atom in one molecule represented by the following average compositional formula:
RₐR'_{b}SiO_{(4-a-b)/2}
wherein R represents an alkenyl group, R' represents a substituted or unsubstituted monovalent hydrocarbon group containing 1 to 10 carbon atoms not having an aliphatic unsaturated bond, and a and b are a number satisfying 0 < a ≤ 2, 0 < b < 3, and 0 < a+b ≤ 3;
(B) 0.3 to 30 parts by weight of an organohydrogenpolysiloxane having at least 2 hydrogen atoms bonded to the silicon atom in one molecule and not containing an aromatic group;
(C) 0.1 to 10 parts by weight of an organohydrogenpolysiloxane having at least one monovalent aromatic group bonded to the silicon atom and hydrogen atom bonded to the silicon atom in one molecule;
(D) 0.1 to 30 parts by weight of an organosilicon compound having a divalent to tetravalent aromatic group bonded to the silicon atom and hydrogen atom bonded to the silicon atom in one molecule;
(E) 0.01 to 10 parts by weight of an organic compound or an organosilicon compound having at least one (meth)acryl group in one molecule with the proviso that the molecule does not contain hydrogen atom bonded to the silicon atom; and
(F) an addition catalyst at a catalytic amount.

2. An addition curable silicone adhesive composition according to claim 1 wherein the component (B) contains at least one alkoxysilyl group.

3. An addition curable silicone adhesive composition according to claim 1 or 2 further comprising (G) an organometallic compound which is at least one member selected from titanium compounds and zirconium compounds, at an amount of 0.001 to 5 parts by weight in relation to 100 parts by weight of the component (A).

4. An addition curable silicone adhesive composition according to any one of claims 1 to 3 further comprising (H) a reinforcing silica fine powder at an amount of 5 to 100 parts by weight in relation to 100 parts by weight of the component (A).

5. An addition curable silicone adhesive composition according to any one of claims 1 to 4 wherein the adhesive composition is the one used for adhesion of a metal, glass, or an organic resin.
